# EUROPEAN PATENT SPECIFICATION

(11) **EP 4 140 304 B1**
(45) Date of publication and mention of the grant of the patent: **01.07.2026**
(21) Application number: 22201395.5
(22) Date of filing: 31.05.2019
(51) Int. Cl.: A01N 57/20, C14C 9/00, A01P 1/00

(54) **COMPOSITION FOR IMPREGNATING A SUBSTRATE, IN PARTICULAR A WATCHSTRAP**
ZUSAMMENSETZUNG ZUM IMPRÄGNIEREN EINES SUBSTRATS, INSBESONDERE EINES UHRENBANDES
COMPOSITION POUR IMPRÉGNER UN SUBSTRAT, EN PARTICULIER UN BRACELET DE MONTRE

(43) Date of publication of application: 01.03.2023
(62) Divisional of application: 19177565.9
(73) Proprietor: Rolex S.A., 1211 Genève 26 (CH)
(72) Inventor: DURGNAT, Jean-Marc, Lausanne (CH); SOBRINO, Pablo, Nyon (CH); MARTIN, Frank, Montferrier sur Lez (FR); GRACY, Guillaume, Montpellier (FR)
(74) Representative: Gille Hrabal Partnerschaftsgesellschaft mbB Patentanwälte

(56) References cited:
- EP-A1- 0 452 736
- WO-A1-2014/127451
- CN-A- 102 851 411
- US-A1- 2010 249 425
- "Recent Applications in Sol-Gel Synthesis", 5 July 2017, INTECH, ISBN: 978-953-51-3246-2, article FRANCO FERRERO ET AL: "Sol-Gel Process for Surface Modification of Leather", pages: 283 - 299, XP055665028, DOI: 10.5772/67837
- B MAHLTIG ET AL: "Modified silica sol coatings for surface enhancement of leather.", 1 June 2012 (2012-06-01), SI, pages 331 - 337, XP055665039, ISSN: 1318-0207, Retrieved from the Internet <URL:http://www.ncbi.nlm.nih.gov/pubmed/24061249>
- SUDHAHAR SIVARAJ ET AL: "Preparation, Characterization and Application of Silica Metal Oxide Nanoparticles for Leather Coating", JOURNAL OF THE AMERICAN LEATHER CHEMISTS ASSOCIATION, 1 July 2012 (2012-07-01), U.S.A., pages 249 - 255, XP093012706, Retrieved from the Internet <URL:https://journals.uc.edu/index.php/JALCA/article/view/3413> [retrieved on 20230110]
- LI MEI ET AL: "Creating superhydrophobic surfaces with flowery structures on nickel substrates through a wet-chemical-process", vol. 17, no. 45, 27 September 2007 (2007-09-27), GB, pages 4772 - 4776, XP093012769, ISSN: 0959-9428, Retrieved from the Internet <URL:https://pubs.rsc.org/en/content/articlepdf/2007/jm/b709665h> DOI: 10.1039/b709665h
- GUERRERO G ET AL: "Inhibition de l'adhesion bacterienne et prevention de la formation d'un biofilm : utilisation de monocouches autoassemblees organiques sur des surfaces inorganiques", PATHOLOGIE BIOLOGIE, L'EXPANSION SCIENTIFIQUE FRANCAISE, PARIS, FR, vol. 57, no. 1, 1 February 2009 (2009-02-01), pages 36 - 43, XP025937138, ISSN: 0369-8114, [retrieved on 20080927], DOI: 10.1016/J.PATBIO.2008.07.032

## Description

There is a need for improving the lifespan of watchstraps without impacting on the natural look and feel of the leather. A composition allowing an improvement in water repellence and microbial resistance has been elaborated. Finished leather watchstraps can be treated with the composition to improve the satisfaction of customers.

Advantageously, leather watchstraps can be treated fully assembled, allowing to treat the straps from different suppliers. This will make it possible to differentiate genuine straps provided by the applicant from other straps available on the market.

### FIELD OF THE INVENTION

The present invention, inter alia, relates to a composition and the treatment of leather, vegetal leather or textile used as watchstraps.

The composition contains a sol-gel and an active organic compound (sometimes designated as "active molecule" in the present description) comprising a phosphonic acid group and one or more hydrophobic or hyper-hydrophobic functional groups (in particular alkyl groups, preferably fluorinated alkyl groups).

### GENERAL DESCRIPTION

### TECHNICAL PROBLEM TO BE SOLVED

Leather watchstrap and leather jewellery are natural products that evolve over time. Subject to current wear conditions, in particular water and contact with the wearer's skin, they degrade rapidly both in terms of aesthetics and olfactory sensations. The rapid degradation of the leather watchstrap or leather jewellery is due, among other factors, to the exposure of the watchstrap to moisture, water and various organic materials derived from the activities carried out while wearing it (sweat, soap, dirt, etc.). Additionally, leather watchstraps can be a complex assembly of different kinds of leather and/or other materials. It can comprise a liner, a top layer, a stuffing, etc. The stuffing can be in leather or in another material. However, users want to keep the natural look and feel of leather as long as possible.

### BRIEF DESCRIPTION OF THE SOLUTION

The solution to this problem proposed by the invention consists in applying a composition to a watchstrap or to elements intended for producing a watchstrap, such as the external surface of a watchstrap, the lining, the stitching, and/or the internal elements, such as padding or rip-stop elements. The treatment provides hydrophobic properties allowing to improve the durability of the watchstrap without negatively influencing the look and feel of the watchstrap.

### STATE OF THE ART

Porous substrates, such as wristwatch straps, bracelets or necklaces, are commonly used for articles in contact with the skin of a user. These substrates allow water vapour to pass through and will keep the wear of the article comfortable. However, they have various water repellent behaviour. It is well known that development of bad smell on those products is due to bacterial growth on or in the substrate. However, wristwatch straps, bracelets or necklaces are not easy to clean.

The complex structure of porous substrates such as leather leads to challenges in understanding the exact decay pattern of a particular substrate. The decay depends on several factors including environmental conditions. For leather, its processing is also to be taken into account. Chemical damage can occur from exposure to environmental factors, including ultraviolet light, ozone, acid from sulphurous and nitrous pollutants in the air, sweat, etc. For leather, it is also known that exposure to long periods of low relative humidity (below 40%) can cause desiccation or irreversible changes to its fibrous structure. (Préserver les objets de son patrimoine: précis de conservation préventive; International Institute for Conservation of Historic and Artistic Works. Section frangaise; Editions Mardaga, 2001; ISBN 2870097662, 9782870097663).

Finishing treatment of substrates such as leather consists in a group of surface operations aimed to enhance the natural qualities of the substrate and/or to cover imperfections possibly present on the surface. Mechanical protection, evenness of colour and touch properties are the main requirements for finishing. A number of acrylic, polyurethane and other film-forming synthetic polymers are common ingredients of finishing recipes; they are mixed with natural substances, both native and/or modified, like oils, waxes, caseins, albumins, cellulose esters and other substances. Numerous patents and articles describe these different methods in order to improve the antibacterial resistance, the water and/or oil repellence and/or the antifouling behaviour.

In general, a water- or stain-resistant substrate, such as leather or fabrics, is prepared by using chemicals that enable the formation of functional coatings with low surface free energy on the substrate surface. These coatings can be polymeric thin films containing silicones, fluorinated, or long-chain hydrocarbons. However, the permeability of air and water vapour of Atreated substrate could be compromised, and the development of new methods for the production of such substrates maintaining their natural characteristics is still a challenge.

Examples of fluoroalkyl silane or alkyl silane-based easy-to-clean coatings, i.e., coatings having repellent oil, water, and anti-fouling properties are described in numerous documents (e.g., DE 834 002, US 3,012,006, GB 935,380, US 3,354,022, DE 1 518 551, DE 38 36 815, DE 42 18 657, DE 195 44 763, WO 95/23830, EP 0 799 873, EP 0 846 716, JP 2001/115151, EP 1 033 395, EP 1 101 787). These coatings will offer protection to the leather, but can be seen and/or felt, and will lead to a perception that the leather has been treated and an artificial aspect.

The oil and water repellence can be imparted to the surfaces by hydrolysable fluorocarbon silanes. A chemical bonding occurs between the silane and the active hydrogen functional groups on the substrate. This is achieved by initial hydrolysis of the hydrolysable groups on the silane to silanol groups, which then undergo condensation with the functionality on the substrate. The more hydrolysable groups there are in the fluorocarbon silane to bond with the substrate, the more durable the coating will be (see WO 95/23830).

Leather watchstraps comprising an antibacterial agent are known and are described, for example, in the document DE 203 15 119 U1. According to this document, the watchstrap made of leather comprises an inner band (i.e., liner), in contact with the wearer's skin, made of a leather treated to have antibacterial properties. This strap has the advantage of not developing malodours, particularly in the case of perspiration. However, certain active ingredients incorporated into the strap, such as antibacterial agents, can become irritating or allergenic to the skin, especially in the case of prolonged contact of the strap on the skin, and more particularly in hot and humid conditions.

Furthermore, Franco Ferrero ET AL: "Sol-Gel Process for Surface Modification of Leather" In: "Recent Applications in Sol-Gel Synthesis", 5 July 2017, DOI: 10.5772/67837, B Mahltig ET AL: "Modified silica sol coatings for surface enhancement of leather.", ACTA CHIMICA SLOVENICA, 1 June 2012 (2012-06-01), pages 331-337, XP055665039, SI, ISSN: 1318-0207, Sudhahar Sivaraj ET AL: "Preparation, Characterization and Application of Silica Metal Oxide Nanoparticles for Leather Coating", Journal of the American Leather Chemists Association, 1 July 2012, WO 2014 / 127 451 A1, CN 102 851 411 A, Li Mei ET AL: "Creating superhydrophobic surfaces with flowery structures on nickel substrates through a wet-chemical-process", Journal of Materials Chemistry, vol. 17, no. 45, 27 September 2007, DOI: 10.1039/b709665h, GUERRERO G ET AL: "Inhibition de l'adhesion bacterienne et prevention de la formation d'un biofilm : utilisation de monocouches autoassemblees organiques sur des surfaces inorganiques", PATHOLOGIE BIOLOGIE, L'EXPANSION SCIENTIFIQUE FRANCAISE, PARIS, FR, DOI: 10.1016/J.PATBIO.2008.07.032, US 2010 / 249 425 A1 and EP 0 452 788 A1 deal with sol-gel processes or phosphonates.

### DESCRIPTION

In this application, the use of the word "a" or "an" means "at least one", and the use of "or" means "and/or" unless specifically stated otherwise.

One objective of the treatment of the invention, which is called "functionalization" in this description, is to reduce or limit the presence of microorganisms responsible for unpleasant odours in watchstraps without damaging its look and feel characteristics. The treated substrate will have improved moisture absorbing, cleaning, antifouling and/or odour adsorption properties. The functionalization process does not substantially degrade the substrate, and will keep its original touch and look.

More specifically, the present invention relates to a functionalization composition, to a process of functionalizing a porous substrate such as natural leather, vegetal leather (such as Piñatex^{®}, MycoTEX^{®}, Tencel^{®}, eucalyptus, bamboo, hevea, etc.), cork or fabrics (such as cotton, linen, silk, nylon, polyamide, aramid fabrics and the like), and to a functionalized product made from said substrate.

### DESCRIPTION OF THE FIGURES

Fig. 1 is a diagram showing the water absorption or samples in relation to plasma pressure shown in Table 2 (not according to the invention).
Fig. 2 shows water absorption of samples (%) vs. time lapse after surface preparation obtained in tests 0, 23, 33 and 35 shown in Table 9 (not according to the invention).
Fig. 3 shows water absorption (%) vs. treatment time obtained in tests 0 and 22 to 25 summarized in Table 10 (not according to the invention).
Fig. 4 shows water absorption (%) vs. concentration of treating solution of tests 0, 23 and 26 to 29 given in Table 11 (not according to the invention).
Fig. 5 shows water absorption (%) vs. TEOS-AM_7 ratios.
Fig. 6 shows schematically the two embodiments of the invention explained below (1^{st} embodiment not according to the invention).

The invention is set out in the appended claims. More precisely, the invention is a composition for impregnating a watchstrap or parts thereof, the composition comprising a) a sol-gel, b) at least one active organic compound, wherein the active organic compound is selected from i.) an alkylphosphonic acid of the formula CH₃(CH₂)ₙPO₃H₂, with n comprised between 2 and 18, ii.) a fluorinated alkylphosphonic acid of the formula CF₃(CF₂)ₙ(CH₂)ₘPO₃H₂, with n and m comprised between 2 and 18, m and n being identical or different.

### DETAILED DESCRIPTION OF THE INVENTION

### MEANS TO SOLVE THE PROBLEM

It is known that microorganisms need water in order to be active. By developing a hydrophobic or hyper-hydrophobic functionalization of the substrate, it is possible to limit the water presence inside and/or on the surface of said substrate. This will influence the activity of the microorganisms. Consequently, the substrate will not develop unpleasant odours or it will need much more time to develop such bad smells.

Another way to prevent unpleasant odours is to avoid the fouling of microorganisms. This allows to get rid of the microorganism by a simple mechanical action such as friction of the wrist on the substrate or wiping. Additionally, the compound can also show a bioactivity against the microorganisms causing the bad smells (not according to the invention).

The limitation of microbial growth on or in leather watchband liners in order to limit the development of abnormal odours can occur in two different ways: with an antifouling treatment of the surface of the substrate which will limit the adhesion of the organisms responsible for bad odours, or with a biocide treatment (both not according to the invention). A combination of antifouling and biocide treatment is also possible (not according to the invention). Avoiding the creation of a biofilm due to microorganisms, dead or not, will prevent the generation of bad odours. An antifouling treatment by limiting the presence of microorganisms will avoid or at least limit the bad odours apparition. The degradation of the leather can also be slowed down.

Three approaches have been used by the inventors in all embodiments of the invention:
A. a *hydrophobic or hyper-hydrophobic* treatment may be applied to control the water concentration of the substrate and avoid the introduction of water in the substrate. The accumulation and concentration of substances responsible for bad smells can be limited by inactivating the microorganisms by means of the unfavourable hydric conditions.
B. an *"antifouling"* polyalkylene glycol (e.g., polyethylene glycol) based treatment (not according to the invention) will prevent the microorganisms and cells deposited on the surface from adhering to it. As a result, a simple mechanical action, wrist friction or wiping, will enable their elimination.
C. a treatment to get *cationic bioactive surfaces* (not according to the invention) will have the same *"antifouling"* effect as the polyalkylene glycol treatment.

Approach A of the invention can be combined with the other approaches. In general, one active molecule or a mixture of two or more different active molecules can be applied in the invention.

### FUNCTIONAL GROUPS

The active organic compounds in the functionalizing composition of the invention have a phosphonic acid group and a hydrophobic or hyper-hydrophobic group. The hydrophobic and/or hyper-hydrophobic group-containing compounds used in the composition of the invention are alkyl phosphonates or fluorinated alkyl phosphonates. The alkyl groups may be linear or branched and may have 2 to 18 carbon atoms. The compounds having hydrophobic or hyper-hydrophobic functional groups for use in the invention are CH₃(CH₂)ₙPO₃H₂, with n comprised between 2 and 18, and/or CF₃(CF₂)ₙ(CH₂)ₘPO₃H₂, with n and m comprised between 2 and 18, m and n being identical or different. The fluorinated alkyl phosphonates are most preferred.

The term "phosphonate" is used herein for designating the phosphonic acid and salts thereof. Counter ions of the salt can be any suitable cations such as metal cations (e.g., sodium, potassium, calcium, magnesium and any other metal cation that does not impair the properties of the compound) or organic cations such as ammonium. The phosphonic acid group is preferred.

Preferred hydrophobic or hyper-hydrophobic group-containing active organic compounds for use in the invention are n-octylphosphonic acid, dodecylphosphonic acid, n-octadecyl phosphonic acid, 3,3,4,4,5,5,6,6,6-nonafluorohexadecylphosphonic acid, 12,12,13,13,14,14, 15,15,15-nonafluropentadecylphosphonic acid, 3,3,4,4,5,5,6,6,7,7,8,8,9,9,10,10,10-heptadecafluorodecylphosphonic acid and 12,12,13,13,14,14,15,15,16,16,17,17,18,18,19,19-heptadecafluoro-nonadecylphosphonic acid.

Additionally, bioactive nanoparticles such as silver nanoparticles can be comprised in the functionalizing composition.

The active organic compound can be a mixture of different molecules with specific effect.

In particular, the phosphonic acid and hydrophobic or hyper-hydrophobic group containing compounds are compatible and soluble in ethanol and have a very low reactivity with natural leather and are therefore preferred according to the invention.

The compounds used in the invention are commercially available, or can be synthesized according to methods known in the art from precursor compounds commercially available.

### ACTIVE MOLECULES (AM) TESTED

Alkyl chains, fluoroalkyl chains with a phosphonate (-PO₃H₂) group.

Examples of tested molecules can be seen in the following table.

Examples described in the present specification have been carried out with the AM_7 solution (12,12,13,13,14,14,15,15,15-nonafluoropentadecylphosphonic acid) concentration of 1.21·10⁻² mol·L⁻¹ in ethanol, called "solution 1" (not according to the invention).

Watchstrap elements treated with sol-gel have been tested externally for allergenic substances: no such substances have been found and some of the treated bracelets have been worn during 6 months without any irritation (not according to the invention).

**Table 1**

| # | | Formula | Antifouling effect |
|---|---|---|---|
| AM 3 | n-Octylphosphonic acid | CH₃(CH₂)₇PO(OH)₂ | Hydrophobic |
| AM_4 | Dodecylphosphonic acid | CH₃(CH₂)₁₁PO(OH)₂ | Hydrophobic |
| AM_5 | n-Octadecylphosphonic acid | CH₃(CH₂)₁₇PO(OH)₂ | Hydrophobic |
| AM_6 | 3,3,4,4,5,5,6,6,6-nonafluorohexylphosphonic acid | CF₃(CF₂)₃(CH₂)₂PO(OH)₂ | Hyper-hydrophobic |
| AM_7 | 12,12,13,13,14,14,15,15,15-nonafluoropentadecylphosphonic acid | CF₃(CF₂)₃(CH₂)₁₁PO(OH)₂ | Hyper-hydrophobic |
| AM_8 | 3,3,4,4,5,5,6,6,7,7,8,8,9,9,10,10,10-heptadecafluorodecylphosphonic acid | CF₃(CF₂)₇(CH₂)₂PO(OH)₂ | Hyper-hydrophobic |
| AM_9 | 12,12,13,13,14,14,15,15,16,16,17,17 ,18,18,19,19,19-heptadecafluorononadecyl-phosphonic acid | CF₃(CF₂)₇(CH₂)₁₁PO(OH)₂ | Hyper-hydrophobic |
| AM_12* | 6-[2-[2-(2-methoxyethoxy)ethoxy]ethoxy] hexylphosphonic acid | CH₃O(PEG)₃(CH₂)₆PO(OH)₂ | Antifouling |
| AM_13* | 2-[2-(2-methoxyethoxy)ethoxy] ethylphosphonic acid | CH₃O(PEG)₂(CH₂)₂PO(OH)₂ | Antifouling |
| AM_14* | 2-[2-(2-methoxyethoxy)ethoxy] hexylphosphonic acid | CH₃O(PEG)₂(CH₂)₆PO(OH)₂ | Antifouling |
| AM_15* | 2-[2-(2-hydroxyethoxy)ethoxy] ethylphosphonic acid | HO(PEG)₂(CH₂)₂PO(OH)₂ | Antifouling |
| AM_16_{*} | 2-[2-(2-hydroxyethoxy) ethoxy]hexylphosphonic acid | HO(PEG)₂(CH₂)₆PO(OH)₂₂ | Antifouling |
| AM_17* | {2-[2-[2-[2-[2-[2-[2-[2-[2-[2-[2-[2-[2-(2-hydroxyethoxy)ethoxy]ethoxy]ethoxy] ethoxy]ethoxy]ethoxy]ethoxyl]ethoxy] ethoxy]ethoxy]ethoxy]-ethyl]}phosphonic acid | CH₃O(PEG)₁₅(CH₂)₂PO(OH)₂ | Antifouling |
| AM_19* | 1-Methyl-3- (dodecylphosphonic acid) imidazolium bromide | [Imidazolium⁽⁺⁾ (CH₂)₁₂PO(OH)₂] Br⁽⁻⁾ | Cationic bioactive |
| AM_20* | 1-Methyl-3-(dodecylphosphonic acid) imidazoliumbis(trifluoromethylsulpho nyl)imide | [Imidazolium⁽⁺⁾ (CH₂)₁₂PO(OH)₂] [(F₃CSO₂)N]⁽⁻⁾ | Cationic bioactive |
| AM_21* | 12-Aminododecylphosphonic acid hydrochloride salt | [H₃N⁽⁺⁾(CH₂)₁₂PO(OH)₂)] Cl⁽⁻⁾ | Cationic bioactive |
| AM_22 * | (12-Dodecylphosphonic acid)-N,N-dimethyl-N-octadecyl ammonium chloride | [(CH₃(CH₂)₁₇N⁽⁺⁾ (CH₃)₂(CH₂)₃PO(OH)₂] Cl⁽⁻⁾ | Cationic bioactive |
| AM_23* | (3-Propylphosphonic acid)-N,N-dimethyl-N-octadecyl ammonium chloride | [(CH₃(CH₂)₁₇N⁽⁺⁾ (CH₃)₂(CH₂)₁₂PO(OH)₂] Cl⁽⁻⁾ | Cationic biocative |

| | | | |
|---|---|---|---|
| * not according to the invention | | | |

### PROCESSES

Different processes can be used to functionalize the substrate according to the invention, such as impregnation with a sol-gel, a sol-gel process or any other adapted way.

Additionally, a pre-treatment of the substrate can be done such as O₂ or air plasma treatment, degassing and/or cleaning.

For impregnation, it has been tested that a structure comprising natural leather is not damaged by ethanol in the chosen temperature and duration range (not according to the invention).

In order to evaluate the samples and the process steps, water adsorption of the treated sample has been measured.

### FIRST EMBODIMENT (not according to the invention)

The impregnation method, with an active molecule and an organic solvent (not according to the invention), comprises the steps of:
1) Selecting a substrate such as natural leather, vegetal leather or fabrics;
2) Degassing the substrate to remove among other water in excess or to control water amount in the object;
3) Treating the substrate with O₂ plasma or air plasma for surface activation;
4) Impregnating or coating at least partially the substrate with at least one chosen active organic compound(s) dissolved in a selected organic solvent;
5) Drying the treated substrate to remove the remaining liquid.

### SUBSTRATES

A watchstrap, according to the invention, can be a complex assembly of different kinds of leather and/or other materials, e.g., fabrics. In this case the watchstrap has a multi-layered structure. The watchstrap can comprise a liner, i.e., the layer which is in direct contact to the skin and is disposed on the inner side of the watchstrap.

Liners usually have two sides with different texture. The outer side is the side intended to be in contact with the skin and the inner side is the side intended to be in contact with the rip-stop layer or with the stuffing. The inner side is usually "rougher", i.e., more porous.

The outermost surface layer is normally a leather layer, which gives the watchstrap its outer appearance when the watch is worn. A tear-proof intermediate strengthening layer (rip-stop layer) and/or a stuffing, etc. may also be present. The stuffing can be in leather or in another material. Different parts of the watchstrap can be assembled by any known technique adapted to the combination of material, i.e., sewing, gluing, etc.

All different parts of the watchstrap can be functionalized separately according to the invention, i.e., liner, thread, stuffing, etc. and can be substrates.

Further, only some or all parts can be functionalized before the assembly of the watchstrap.

In an alternative, the assembled watchstrap or a pre-assembled watchstrap element can be functionalized according to the invention.

All of these alternatives are suitable substrates according to the invention.

Advantageously, the substrate is porous such as natural leather, vegetal leather, i.e., natural leather alternatives made from fibers such as cellulosic fibers extracted from plant leaves (such as Piñatex^{®}, MycoTEX^{®}, Tencel^{®}, Lyocell^{®}, pineapple, eucalyptus, bamboo, hevea, etc.), cork, textile fabrics such as cotton, linen, silk, nylon, polyamide, aramid fabrics and the like.

For manufacturing vegetal leather, plant materials such as long plant fibres, i.e., pineapple or eucalyptus fibres, mycelium of mushrooms or the like, are used to create a non-woven substrate, which has an outer appearance strongly similar to natural leather.

Preferably, most parts of the watchstrap and the separate parts thereof such as liner, stuffing and outer surface layer are made of porous material. Some parts such as tear protective layer (rip-stop layer), however, are usually non-porous.

Porous substrates are to be understood in a broad meaning, as for example a matrix containing interstitial spaces or voids in which air or a solvent may pass. Porosity may take several forms, from interconnected micro-porosity, folds, and inclusions to macro porosity visible on the external surface. Spaces between fabric thread or fibers can be assimilated to porosities.

Porous means in particular permeable for water vapour.

According to the invention, natural leather is used preferably as a substrate.

### SURFACE PREPARATION

Before the functionalizing treatment is applied, the surface of the substrate is prepared (pretreated) according to the process of the invention. The main stages of this preparation treatment are degassing and treatment with air or O₂ plasma.

The degassing of a substrate such as leather is important for obtaining a good quality of functionalization in the invention. It mainly ensures the removal of water in the liners. Usually, degassing is achieved by heating to a moderate temperature under vacuum. One example of degassing consists in treating the substrate for 16 hours at 40 °C under a pressure of 0.1 hPa.

The substrate may also be first degassed and then «rewetted» up to a specific preselected humidity before applying the functionalizing treatment of the invention, to stabilize the substrate and avoid further drying. The rewetting can be achieved, for example, by storing the substrate in an environmental chamber at the specific preselected humidity and a suitable temperature until the system is in equilibrium.

Treating a substrate such as natural leather by irradiating oxygen or air plasma onto the surface of the substrate for a predetermined duration and with a selected power has shown to improve the functionalization. Air plasma shows slightly better results than O₂ plasma and is therefore preferred. Plasma is generated by usual means known to the skilled person. By the plasma treatment, the surface of the substrate is activated.

A high power plasma does not improve the surface activation. Results show that a power between 25 and 60 W gives satisfactory results; advantageously a power of 30 W is used according to the invention. The plasma may be applied, for example, using air or O₂, at 25 to 60 W for 30 s to 6 minutes at 0.3 to 3 hPa.

Longer treatment time does not improve the surface activation. A treatment time between 30 seconds and 6 minutes gives satisfactory results; advantageously a duration between 30 seconds to 4 minutes, more advantageously a duration of 30 seconds is employed.

No significant influence of the pressure variation of the plasma has been observed after treatment with a solution of AM_7 in ethanol (not according to the invention) having a concentration of 1.21·10⁻² mol·L⁻¹. The results are shown in Table 2.

**Table 2**

| Test | Absorption (%) | Test | Absorption (%) |
|---|---|---|---|
| Untreated | 54 | No plasma and treated | 43 |
| Plasma and treated* Plasma pressure (hPa) | | Plasma and treated* Plasma pressure (hPa) | |
| 0.1 | 16 | 0.7 | 21 |
| 0.2 | 15 | 0.8 | 14 |
| 0.3 | 17 | 0.9 | 15 |
| 0.4 | 17.5 | 1 | 17.5 |
| 0.5 | 17 | 2 | 17 |
| 0.6 | 17.5 | 3 | 18 |

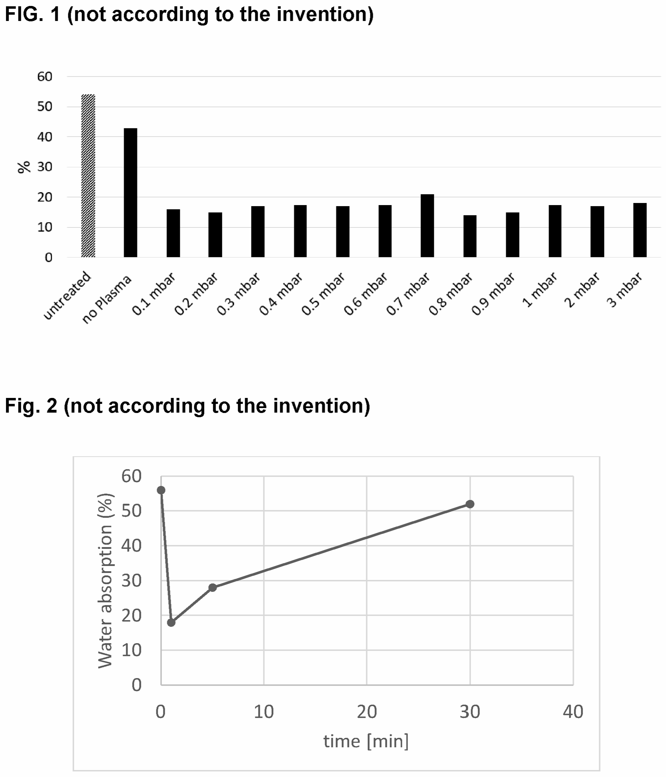

The results of this test are shown in Figure 1 (* not according to the invention)

Best functionalization is obtained with a preparation treatment consisting of degassing for 16 hours at 40 °C under a pressure of 0.1 hPa and subsequent treatment with air plasma for 30 s, 30 W and 0.5 hPa.

### Time after surface activation

Functionalization needs also to occur directly after pre-treatment with air plasma or oxygen plasma. It has been observed that the effect of the pre-treatment will disappear after only 30 minutes. Therefore, according to the method of the invention the functionalization treatment is carried out within 30 minutes after the plasma treatment has been finished.

### FUNCTIONALIZATION TREATMENT

For the functionalizing treatment according to the invention, several parameters have been found to be of importance.

### Solvents

The solvent is an organic solvent. Ethanol and isopropanol are suitable solvents for preparing the functionalization composition.

Other aliphatic alcohols such as methanol, n-propanol are also suitable.

Further, other organic solvents or combination of organic solvents are possible such as linear or cyclic alcohols, linear and cyclic ethers such as diethylether, diethyltert.butylether, tetrahydrofurane, dioxane, esters such as ethylacetate, ketones such as acetone, diethylketone, ethyl methyl ketone, dipolar aprotic solvents, as long as they preserve the substrate and are compatible with the active molecule. The solvent should not have a strong odour and should not have high toxicity when in contact with the skin or when inhaled. Further it should be compatible with the substrate. The solvent is a polar solvent.

Surprisingly, ethanol shows the best results.

The most preferred organic solvent used is ethanol.

### SECOND EMBODIMENT

According to the invention, the leather substrate is impregnated by silica particles using a sol-gel process. The sol-gel additionally contains at least one active molecule. The active molecule(s) are chosen from those defined in the claims.

The method of the second embodiment of the invention preferably includes the following steps
1) Selecting a substrate;
2) Preparing a sol-gel solution in acidic or basic conditions
3) Aging the sol-gel solution;
4) Using the sol-gel solution to at least partially impregnate or coat the substrate;
5) Drying the treated substrate to remove the remaining liquid;
6) Fixing the sol-gel on the substrate by tempering.

### SUBSTRATES

The same substrates as for the first embodiment can be suitably used in this embodiment.

### SURFACE PREPARATION

For this embodiment, no specific surface preparation is needed. However, in an alternative, degassing and/or plasma pre-treatment can be done on the substrate to be treated as described with the examples of the first embodiment.

### SOL-GEL PREPARATION

A sol-gel solution can be made for acidic or basic conditions.

Generally, by the basic sol-gel process (so-called Ströber process) silica (i.e., silicon dioxide) particles are formed, preferably nanoparticles. A hydrolysable precursor, typically tetraethoxysilane (TEOS) is first reacted with water in an alcoholic solution and then the resulting molecules react further to build larger structures. The reaction produces silica particles with a diameter ranging from 50 to 2000 nm, depending on conditions.

By the acidic sol-gel silica process an extended network is obtained which can directly link to the substrate surface and/or inner structure of the substrate. The depth of penetration can be controlled through the viscosity of the sol-gel solution or any other suitable way. The depth of penetration can be up to 100 %.

As precursors, hydrolysable silanes are suitable, such as tetraalkoxysilanes, alkyltrialkoxysilanes, dialkyldialkoxysilanes and the like, wherein alkyl means linear or branched or cyclic C₁₋₈ alkyl such as methyl, ethyl, propyl, butyl, pentyl, hexyl, cyclopentyl, cyclohexyl, and alkoxy means alkoxy having 1 to 8 carbon atoms, such as methoxy, ethoxy, propoxy, butoxy, pentoxy, hexyloxy, which may all be linear or branched.

Preferably, tetraethoxysilane (TEOS), methyltrimethoxysilane (MTMOS), Methoxy propyloxysilane or butoxysilane are used according to the invention.

The pH in the acidic procedure is usually 0.5 to 4, preferably 1-2.5, most preferably 1.5 to 2. In the basic procedure, the pH is usually 7 to 10, preferably 8 to 9.

Usually, the sol-gel is prepared from the precursors and a suitable solvent such as ethanol under stirring and heating for an appropriate time, e.g., for 1 to 4 hours, preferably 2 hours at elevated temperature of 30 to 85 °C, preferably 40 to 70 °C, usually 62 °C, and then cooled down to room temperature, i.e., 22 to 25 °C. Then, it is coated on the leather substrate by a suitable method such as dipping (immersing) and then the coated substrate is tempered.
- For acidic conditions the sol-gel solution preferably comprises at least 3 g TEOS in 15 - 1 g EtOH and 1.5 - 0.5 g HCl 0.5 M (pH = 1.5 - 2) and optionally contains at least one active molecule at a concentration smaller or at about its solubility limit in the sol-gel solution;
- For basic conditions the conditions according to the Ströber procedure with ammoniac as a catalyst are applied (see W. Ströber, A. Fink et E. J. Bohn, J. Coll. Interface Sci, 1968, 26, 62). Optionally the sol-gel contains at least active molecule at a concentration smaller or at about its solubility limit in the sol-gel solution.

Further, bioactive metal nanoparticles, preferably silver nanoparticles can be added to the sol-gel.

### Sol-Gel solution with active molecules

A sol-gel is preferably prepared with a selected solution (TEOS/EtOH ratio adapted) under stirring and reflux for a suitable time, e.g., for 1 to 4 hours, preferably 2 hours at elevated temperature of 30 to 85 °C, preferably 40 to 70 °C, usually 62 °C. The sol-gel is cooled down for an appropriate time, which is usually at least 20 minutes.

A sol-gel without active molecules (not according to the invention) is for example obtained by mixing 15.0 g of ethanol with 3.0 g TEOS (3.2 mL, 1.44·10⁻² mol) and 1.1 g HCl 0.5 mol·L⁻¹. The molar ratio TEOS:EtOH:H₂O is selected as desired. Preferably, it is 1:23:4.

The leather substrate is for example treated by dipping in the sol-gel for approx. 5 minutes.

The substrate is then tempered in an oven at elevated temperature for a certain time, usually at 85 °C for 15 h.

Different batches of leather substrate can exhibit a variation of the efficiency of the treatment.

### Concentration of the active molecules in the sol-gel solution

To a sol-gel prepared as described before active molecules (i.e., active organic compounds) are added. The active molecules are the same as explained for the first embodiment of the invention. Preferred examples of active molecules are the same as for embodiment 1. In particular, AM_7 and AM_5 have been tested in this embodiment in the sol-gel solution and are particularly preferred. One active molecule or a mixture of two or more different active molecules can be used. Usually, the active molecule(s) is/are added to the sol-gel in form of a solution in a suitable solvent as described for the first embodiment, preferably in ethanol.

The concentration ratio of the precursor of the sol-gel solution, such as TEOS, to the active molecule(s) can be selected within a wide range of 10:1 to 100:1. Preferably, the ratio TEOS:AM is within 15:1 to 65:1, and specifically 17:1, 43:1 and 62 :1 may be used. However, the variation in the concentration of active molecule(s) does not affect significantly the final performance of the treated leather.

### Aging of sol-gel solution with AM

The term aging used in the present description does not necessarily match the respective phase well known in sol-gel chemistry. Herein, it is essentially used to represent laboratory manipulation steps.

Herein, the term aging is used to designate stirring for a certain time at a certain temperature, generally under reflux. There is no significant variation in the water absorption between the different samples in spite of a change in the reflux parameters used for aging the sol-gel.

By increasing the aging temperature, the desired sol-gel properties are maintained, with the benefit of a reduction of the handling time. However, the higher the reflux temperature, the longer the cooling time.

Temperature range for aging the sol-gel solution can be between 20 °C and 70 °C for 24 to 1 hour.

Advantageously a temperature from 56 °C to 62 °C for 3 hours 50 minutes - 1 hour and 45 minutes makes it possible to limit the cooling down time while keeping a reasonable duration for the aging step.

### Functionalization treatment

The sol-gel treatment of the substrate is processed by dip-coating or any other suitable technique well known to the person skilled in the art. The minimum treatment time (5 -10 min) has been chosen in order to have the sol-gel solution fully impregnating the leather substrate.

### Sample tempering after functionalization with sol-gel solution with AM

After coating the sol-gel onto the substrate, tempering is carried out, i.e., heating to a predetermined temperature for a certain time. By the tempering step, polymerization of the sol-gel to silica and evaporation of the solvent is achieved. If the tempering time is too short, complete polymerization of the sol-gel and total evaporation of the solvent cannot be achieved.

The increase of the temperature shortens the reaction time. However, a higher temperature could lead to the degradation of the leather. No visual modification of the samples processed at 105 °C and 120 °C have been detected, but a shrinking of the leather samples has been observed at a temperature > 85 °C due to the nature of the substrate.

Tempering time has to allow complete polymerization of the sol-gel and the total evaporation of the solvent. Results show that after 17 hours at 65 °C, polymerization is completed.

Minimal tempering time in the chosen temperature range is about 5 hours. There is no need to temper for longer than 24 hours. Even if a shorter time was sufficient, samples were left overnight (for about 15 to 17 hours).

Preferably recommended tempering temperature is from 55 °C to 85 °C, preferably 65 °C in order to preserve the leather structure.

### Composition of the sol-gel / ratio precursor / AM

By modifying the TEOS/AM ratio, the water absorption (%) of the leather substrate is influenced.

Generally, for each AM concentration, there is an optimal range of precursor concentrations, whereas above or below this range, the water absorption increases. The optimum ratio precursor (preferably TEOS) / active molecule(s) can be selected by simple experimental tests.

An increase of the AM concentration induces globally a reduction of the water absorption of the leather substrate.

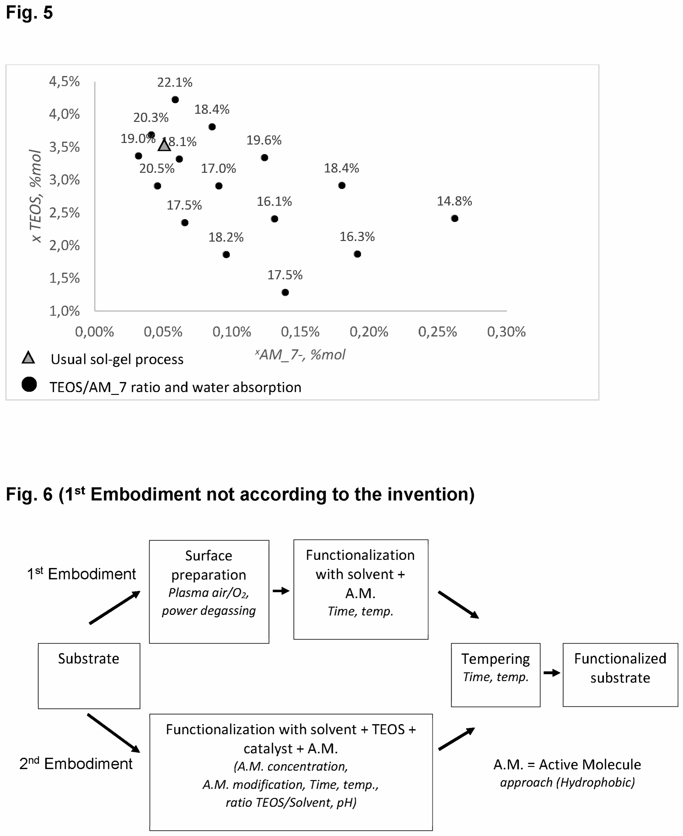

When, as an example, the AM_7 concentration is increased by a factor 7 (8.54 10⁻² mol·L⁻¹ instead of 1.21·10⁻² mol·L⁻¹), a gain of water absorption of only 4 % is observed, as illustrated in Figure 5.

As example, for 0.09 mol% of AM based on the total sol-gel solution including AM, a concentration of 2.9 mol% of TEOS is preferable, with a water absorption of 17 %. The water absorption is higher for the same 0.09 mol % of AM_7 and concentrations of TEOS of 1.8 mol% or 3.8 mol%.

### "Multilayer"

With a view to enhance the mechanical or physico-chemical properties of the sol-gel treatment, successive treatments can be used. That is, the steps of embodiment 2 are repeated using the same composition or different compositions. The layers can be of identical nature or with alternating properties, i.e., first layer without active molecule and then functional layer (i.e. layer with active molecule(s), etc (not according to the invention). Alternatively, layers with different active molecules are also possible, such as no AM / AM / no AM (not according to the invention), AM1 / AM2 / ... ,AM1 / AM1 or any combination.

### Mechanism of substrate functionalization

For leather, the selected sol-gel solutions have a good chemical compatibility with the collagen structure. Therefore, the tri-dimensional network of the sol-gel is also incorporated at least partially inside the leather. Analyses with SEM-EDX have shown that the sol-gel, prepared in acidic conditions, penetrates deeply inside the leather, preferably essentially throughout the complete thickness, and has no measurable impact on the topology of the leather. SEM-EDX could not identify any film or microstructure. However, silica was present in the observed zone. In view of the results, the sol-gel network seems to be a nanometric network directly linked to the collagen network of the leather.

Analyses with SEM-EDX have shown that the sol-gel, prepared in basic conditions, consists of silica particles with a diameter ranging from 50 to 2000 nm. The particles penetrate inside the leather in function of the size of the porosity and of the silica particles.

For the SEM-EDX measurements, a MEB Zeiss Sigma 300 with EDX was used.

The same logic applies for other porous substrate such as fabrics. One effect of the functionalization according to the second embodiment of the invention is to reduce at least some of the interstitial spaces or to fill at least some of the voids in order to reduce the void fraction in which microorganisms could find suitable growth conditions.

### Optimal parameters for sol-gel method

Finally, the most preferred embodiments of the sol-gel embodiment of the invention are
- Active molecule
   ∘ 12,12,13,13,14,14,15,15,15-nonafluoropentadecylphosphonic acid (AM_7)
- Sol-gel composition
   ∘ A tetraethoxysilane (TEOS) sol-gel solution with a molar ratio TEOS:EtOH:H₂O of 1:23:4 was prepared by mixing 3.0 g TEOS with 15.0 g of a solution of 1.21 10⁻² mol/I of 12,12,13,13,14,14,15,15,15-nonafluoropentadecylphosphonicacid (AM_7) in ethanol. pH was adjusted by adding 1.5 g of HCl 0.5 M to pH 2.
- Optimized process
   ∘ Preparation of the sol-gel under stirring and reflux for 2 hours at 62 °C.
   ∘ cooling down of the sol-gel for at least 20 minutes
   ∘ treatment of the substrate by dipping and stirring for 5 minutes
   ∘ tempering of the substrate in an oven at 65 °C for 17h.

### EXAMPLES

All Examples described in the present description have been made with natural leather liners made of alzavel (calf leather).

The water absorption measurement in the Examples has been carried out using a desiccant scale working on the principle of thermo-gravimetry. The laboratory apparatus was an OHAUS^{™} MB35. The samples to be measured are usually dried before the measurement (the last manipulation being a passage in the oven or a previous measurement of water intake). The protocol for a sample is as follows:
- place a weighing dish in the thermo-gravimetric scale;
- fully immerse the sample in a container containing ultra-pure water for one minute.
- wipe the sample with paper towels;
- repeat the immersion and wiping operations 5 times;
- place the sample on the weighing dish in the scale;
- start the drying program. This program heats the sample to 60 °C and tracks the sample weight as the water evaporates under the effect of heat.

### COMPARISON BETWEEN ACTIVE MOLECULES

A comparison of the different active molecules on a substrate treated with air plasma (30 or 60 W, 30 s, 0.5 hPa) followed by an immersion in ethanol solution (concentration of the active molecule 10⁻² M) for 6 hours at ambient temperature has been made (not according to the invention).

The results of the samples of tests 40, 41, 43, 44 and 45 (not according to the invention) show that the hydrophobic character is present for these active molecules. These hydrophobic functionalized substrates show no diffusion of a drop of water through the surface of the substrate.

For the measurement, a drop of water is deposited on the leather; the duration for the absorption of the water (visually observed) is chronometered.

Additionally, for substrates made of the leather layer liner, either alone or in combination with an untearable layer and/or a filler and/or a top layer, the water does not penetrate into most of the liners after 48 hours of immersion in the functionalization solution.

Surprisingly, it is observed that the surfaces functionalized with polyethylene glycol containing active molecules (tests 46 to 49) are relatively hydrophobic in terms of drop angle and there is no diffusion of a single drop of water through the treated surface. However, the water intake of the complete sample dipped in water is almost instantaneous and coherent with the active molecule used. No difference is observed between the PEG containing active molecules having a terminal OH function and those having a methoxy function.

56 % is the maximum water increase when the calf leather (Alzavel) is saturated with water. Different types of leather and different batches of the same leather type may have different water saturation levels, which is known to the skilled person.

The drop angle is measured by goniometry. The results are shown in Table 3.

**Table 3**

| Test | Active molecule tested | Water absorption (%) | Drop angle (°) | Time for water absorption up to saturation (h) |
|---|---|---|---|---|
| 0* | Untreated leather substrate | 56 | 116 | <0.25 |
| 38* | AM_3 | 53 | 70.3 | 2-16 |
| 39* | AM_4 | | 97.2 | 1 |
| 40* | AM_5 | 15 | | |
| 41* | AM_5 | 22 | 106.2 | >48 |
| 42* | AM_6 | | 123.3 | 2-16 |
| 43* | AM_7 | 18 | 138.6 | >48 |
| 44* | AM_8 | | 131 | >48 |
| 45* | AM_9 | 8 | 123 | >48 |
| 46* | AM_13 | 55 | 105.1 | <0.1 |
| 47* | AM_14 | | 109.6 | <0.1 |
| 48* | AM_15 | 50 | 108.5 | <0.1 |
| 49* | AM_16 | | 103.7 | 1 |

| | | | | |
|---|---|---|---|---|
| * not according to the invention | | | | |

### SURFACE PREPARATION

### Degassing

Degassing has been carried out by treating the substrate for 16 hours at 40 °C under a pressure of 0.1 hPa.

Comparison of water absorption without and with prior degassing shows that for any pre-treatment (air or O₂), an improvement is shown in the following Table 4 (not according to the invention) with degassing. Samples 1 to 6 were functionalized with a solution of AM_7 in ethanol having a concentration of 1.21·10⁻² mol·L⁻¹.

**Table 4**

| Test | Degassing | No plasma, plasma air or O₂ | Plasma power (W) | Pretreatment time with plasma (min) | Water absorption (%) |
|---|---|---|---|---|---|
| 0* | Untreated leather substrate | | | | 56 |
| 1* | No | Air | 60 | 4 | 53 |
| 2* | No | Air | 30 | 4 | 52 |
| 3* | No | O₂ | 60 | 4 | 51 |
| 4* | Yes | Air | 60 | 4 | 34 |
| 5* | Yes | Air | 30 | 4 | 18 |
| 6* | Yes | O₂ | 60 | 4 | 33 |

| | | | | | |
|---|---|---|---|---|---|
| * not according to the invention | | | | | |

### Surface activation (see tests results 4 to 21 in Table 5) (not according to the invention)

Samples 4 to 21 were functionalized with a solution of AM_7 in ethanol having a concentration of 1.21·10⁻² mol·L⁻¹.

The results of Table 5 below show that:
- Plasma vs. no plasma
   Treating a substrate such as natural leather by irradiating oxygen or air plasma onto the surface of the substrate for a predetermined duration and with a selected power has shown to improve the functionalization.
- O₂ vs. air plasma
   Air plasma shows slightly better results that O₂ plasma.
- Plasma power
   The power of the plasma has been tested between 30 W and 300 W. A high power plasma does not improve the surface activation. Results show that a power between 25 and 60 W gives satisfactory results; advantageously a power of 30 W is used.
- Plasma treatment duration
   Treatment time has been tested between 30 seconds and 8 minutes. Longer treatment time does not improve the surface activation. Results (see tests 17 to 21 in Table 5) show that a treatment time between 30 seconds and 6 minutes gives satisfactory results; advantageously a duration between 30 seconds to 4 minutes, more advantageously a duration of 30 seconds.
- Plasma pressure
   The pressure has been varied between 0.1 hPa to 3 hPa. As illustrated in Figure 1, it is to be noted that no significant influence of the pressure variation of the plasma has been observed.

As shown in the following Table 5, best functionalization with AM_7 in ethanol at a concentration of 1.21·10⁻² mol·L⁻¹ was obtained with degassing and air plasma for 30 s, 30 W and 0.5 hPa.

**Table 5**

| Test | Degassing | No plasma, plasma air or O₂ | Plasma power (W) | Pretreatment time with plasma (min) | Water absorption (%) |
|---|---|---|---|---|---|
| 0* | Untreated leather substrate 56 | | | | |
| 4* | yes | Air | 60 | 4 | 34 |
| 5* | yes | Air | 30 | 4 | 18 |
| 6* | yes | O₂ | 60 | 4 | 33 |
| 7* | yes | O₂ | 30 | 4 | 37 |
| 8* | yes | No | | | 43 |
| 9* | yes | Air | 120 | 4 | 45 |
| 10* | yes | Air | 180 | 4 | 46 |
| 11* | yes | Air | 240 | 4 | 43 |
| 12* | yes | Air | 300 | 4 | 40 |
| 13* | yes | O₂ | 120 | 4 | 34 |
| 14* | yes | O₂ | 180 | 4 | 42 |
| 15* | yes | O₂ | 240 | 4 | 40 |
| 16* | yes | O₂ | 300 | 4 | 44 |
| 17* | yes | Air | 30 | 0.5 | 16 |
| 18* | yes | Air | 30 | 1 | 19 |
| 19* | yes | Air | 30 | 2 | 18 |
| 20* | yes | Air | 30 | 4 | 20 |
| 21* | yes | Air | 30 | 8 | 32 |

| | | | | | |
|---|---|---|---|---|---|
| * not according to the invention | | | | | |

### SOL-GEL PREPARATION

### Sol-Gel

A sol-gel was prepared with a selected solution (TEOS/EtOH ratio adapted) under stirring and reflux for 2 hours at 62 °C. The sol-gel was cooled down for at least 20 minutes. A sol-gel without active molecules (not according to the invention) was obtained by mixing 15.0 g of ethanol with 3.0 g TEOS (3.2 mL, 1.44·10⁻² mol) and 1.1 g HCl 0.5 mol·L⁻¹. The molar ratio TEOS:EtOH:H₂O was 1:23:4.

The leather substrate was treated by dipping in the sol-gel for 5 minutes (not according to the invention). The substrate was then tempered in an oven at 85 °C for 15 h. The results summarized in Table 6 show that up to a mass ratio of 1.11, the higher the concentration of TEOS in ethanol, the lower the water absorption is. The results are shown in Table 6.

**Table 6**

| Test | Solution | Mass ratio TEOS/EtOH^{†} | Number of samples | Water absorption (%) |
|---|---|---|---|---|
| 0* | Untreated leather substrate | | | 56 |
| 81-83* | Sol-gel without active molecules | 0.20 | 6 | 25.2 |
| 77* | Sol-gel without active molecules | 0.54 | 2 | 37.5 |
| 79* | Sol-gel without active molecules | 1.11 | 2 | 38.9 |
| 80* | Sol-gel without active molecules | 3.96 | 2 | 28.4 |

| | | | | |
|---|---|---|---|---|
| † 0.20 = 0.2 g of TEOS for 1 g EtOH * not according to the invention | | | | |

It is to be noted that different batches of leather substrate have been used and that there is a variation of the efficiency of the treatment directly related to this.

### Concentration of the active molecules in the sol-gel solution

A sol-gel was prepared with a selected solution (molar concentration adapted) under stirring and reflux for 2 hours at 62 °C. The sol-gel was cooled down for at least 20 minutes.

Sol-gel A and Sol-gel B have been used.

### Example 1: Sol-gel A

A tetraethoxy silane (TEOS) sol-gel solution with a molar ratio TEOS:EtOH:H₂O of 1:23:4 was prepared by mixing 3.0 g TEOS with 15.0 g of a solution of 1.21 10⁻² mol/I of 12,12,13,13,14,14,15,15,15-nonafluoropentadecylphosphonicacid (AM_7) in ethanol. pH was adjusted by adding 1.5 g of HCl 0.5 M.

### Example 2: Sol-gel B

A tetraethoxy silane (TEOS) sol-gel solution with a molar ratio TEOS:EtOH:H₂O of 1:23:4 was prepared by mixing 3.0 g TEOS with 15.0 g of a solution of 1.21 10⁻² mol/I of n-Octadecylphosphonic acid (AM_5) in ethanol. pH was adjusted by adding 1.5 g of HCl 0.5 M.

The leather substrate was treated by dipping in the sol-gel for 5 minutes. The substrate was then tempered in an oven at 85 °C for 15 h. The results are shown in Table 7.

**Table 7**

| Test | Solution | Molar ratio TEOS : AM | Number of samples | Water absorption (%) |
|---|---|---|---|---|
| 71 | Sol-gel B | 62:1 | 6 | 20.8 |
| 72 | Sol-gel B | 17:1 | 2 | 20.7 |
| 73 | Sol-gel B | 43:1 | 2 | 19.7 |
| 74 | Sol-gel A | 62:1 | 8 | 20.0 |
| 75 | Sol-gel A | 62:1 | 7 | 17.9 |

Treatments with n-Octadecylphosphonic acid (AM_5) as an active molecule (Sol-gel B) achieve a slightly less interesting performance than with 12,12,13,13,14,14,15,15,15-nonafluoropentadecylphosphonic acid (AM_7) (Sol-gel A), but with a fairly small difference.

In the studied range, the variation in the concentration of active molecule does not affect significantly the final performance of the treated leather.

### Example 3: Sol-gel C (not according to the invention)

A tetraethoxy silane (TEOS) sol-gel solution with a molar ratio TEOS:EtOH:H₂O of 1:23:4 was prepared by mixing 3.0 g TEOS with 15.0 g of ethanol and 0.66 wt% of silver nanoparticles (40 nm or 60 nm). pH was adjusted by adding 1.5 g of HCl 0.5 M.

### Example 4: Sol-gel D

A methyltrimethoxysilane (MTMOS) sol-gel solution with a molar ratio MTMOS:EtOH:H₂O of 1:23:4 was prepared by mixing 3.0 g MTMOS with 15.0 g of a solution of 1.21 10⁻² mol/I of 12,12,13,13,14,14,15,15,15-nonafluoropentadecyl-phosphonicacid (AM_7) in ethanol. pH was adjusted by adding 1.5 g of HCl 0.5 M.

### Other example of solution (not according to the invention)

A solution of n-Octadecylphosphonic acid in ethanol at a predetermined concentration of 1.21·10⁻² mol·L⁻¹ to solubility limit was prepared. The solution was heated at about 60 °C and stirred to achieve the full dissolution of the solid. Processing a substrate with this second solution shows the same tendencies as with the solution 1.

### Aging of sol-gel solution and AM

It has been found that the water absorption greatly decreases between one untreated liner (54.6%) and the treated liners (between 27% and 22%). However, there is no significant variation in the water absorption between the different samples in spite of a change in the reflux parameters used for aging the sol-gel.

The results of the corresponding test are shown in Table 8 below (not according to the invention). As can be seen in the results of table 8, the functionalization has more impact on the inner side of the liner, which is more porous than the outer side.

**Table 8**

| Test | Sol-gel solution aging | | Water absorption (%) | | | Drop angle (°) | |
|---|---|---|---|---|---|---|---|
| | t (h:min) | T (°C) | 1^{st} meas. | 2^{nd} meas. | Average | Outer side of liner | Inner side of liner |
| 0** | Untreated leather liner | | 55.9 | 53.3 | 54.6 | 114.3 | * |
| 54** | 23:00 | 48 | 27.4 | 24.0 | 25.7 | 116.9 | 130.8 |
| 55** | 23:00 | 24 | 29.0 | 24.1 | 26.6 | 112.9 | 133.7 |
| 56** | 2:30 | 62 | 24.8 | 21.6 | 26.2 | 118.9 | 140.5 |
| 57** | 3:50 | 62 | 22.1 | 23.1 | 22.4 | 118.7 | 138.7 |
| 58** | 1:45 | 70 | 30.6 | 22.7 | 26.6 | 122.8 | 134.7 |
| 59** | 3:15 | 70 | 24.2 | 22.6 | 23.4 | 120.5 | 133.8 |
| 60** | 2:20 | 56 | 23.0 | 23.8 | 23.4 | - | - |
| 61** | 3:15 | 56 | 22.2 | 23.4 | 22.8 | - | - |

| | | | | | | | |
|---|---|---|---|---|---|---|---|
| * on the untreated liner, the water is absorbed too fast to allow any measurement on the inner face of the liner ** not according to the invention - not measured | | | | | | | |

A clear improvement in the hydrophobicity (Drop Angle) of the inner face of the liner is measured between the treated and untreated liners, but the variations are not perceptible between the different liners.

### Functionalizing treatment (not according to the invention)

The chosen active molecule (AM) is mixed with the selected solvent. Mixing is done for 6 hours with a solution containing between 10⁻⁴ M and the solubility limit of the chosen active molecule in a selected solvent such as ethanol. Other solvents or a mixture of solvents is also possible as long as they are compatible with the substrate and the sol-gel process. If necessary, the mixture can be heated and/or stirred until complete dissolution of the active molecule.

### Solvents (not according to the invention)

Ethanol and isopropanol have been tested. Both are suitable.

### Time after surface activation (Tests 23, 33 to 35) (not according to the invention)

Functionalization needs also to occur directly after pre-treatment with the oxygen plasma or air plasma. It has been observed that the effect of the plasma pre-treatment will essentially disappear after only 30 minutes. The results are shown in Table 9.

**Table 9**

| Test | Treatment time for solution 1 (h) | Concentration (Mol L⁻¹) | No. of treated samples | Time after surface activation (min) | Water absorption (%) |
|---|---|---|---|---|---|
| 0* | Untreated leather substrate | | | | 56 |
| 23* | 6 | 10⁻² | 1 | 1 | 18 |
| 33* | 6 | 10⁻² | 1 | 5 | 28 |
| 35* | 6 | 10⁻² | 1 | 30 | 52 |

| | | | | | |
|---|---|---|---|---|---|
| * not according to the invention | | | | | |

The results of this test are shown in Figure 2.

### Treatment time (Tests 22 to 25) (not according to the invention)

It has been shown that after a certain immersion time, there is no improvement of the water repellence of the treated surface. For AM_7 in ethanol at a concentration of 1.21·10⁻² mol·L⁻¹ (solution 1), after 6 hours of impregnation, the absorption is of 18 % and increasing the time does not affect significantly the behaviour of the substrate. The results are shown in Table 10.

**Table 10**

| Test | Treatment time for solution 1 (h) | Concentration (Mol L⁻¹) | No. of treated samples | Time after surface activation (min) | Water absorption (%) |
|---|---|---|---|---|---|
| 0* | Untreated leather substrate | | | | 56 |
| 22* | 3 | 10⁻² | 1 | 1 | 34 |
| 23* | 6 | 10⁻² | 1 | 1 | 18 |
| 24* | 14 | 10⁻² | 1 | 1 | 17 |
| 25* | 24 | 10⁻² | 1 | 1 | 18 |

| | | | | | |
|---|---|---|---|---|---|
| * not according to the invention | | | | | |

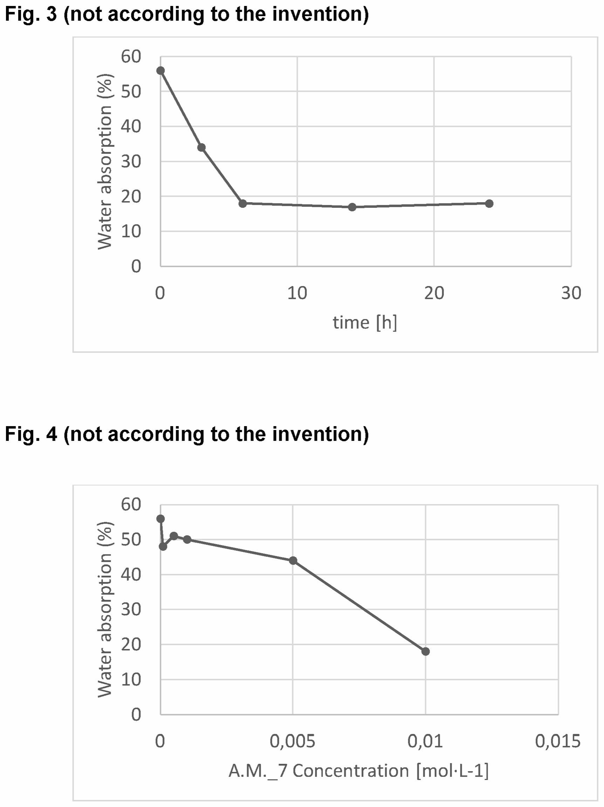

The result of this test is shown in Fig. 3.

### Concentration of the solution (Tests 23 and 26-29) (not according to the invention)

The concentration of the active molecule should be as high as possible without formation of any precipitate; therefore, it should be set as close as possible to the solubility limit of the active molecule in the respective solvent as shown in Table 11.

Optimal functionalization with AM_7 in ethanol at a concentration of 1.21·10⁻² mol·L⁻¹ (solution 1) were obtained with air plasma (30 s, 30 W, 0.5 hPa), followed by an immersion of the substrate for 1 minute or less after the surface plasma treatment, and keeping the substrate immersed in the solution for 6 h.

**Table 11**

| Test | Treatment time for solution 1 (h) | Concentration (Mol L⁻¹) | No. of treated samples | Time after surface activation (min) | Water absorption (%) |
|---|---|---|---|---|---|
| 0* | Untreated leather substrate | | | | 56 |
| 23* | 6 | 10⁻² | 1 | 1 | 18 |
| 26* | 6 | 5 x 10⁻³ | 1 | 1 | 44 |
| 27* | 6 | 10⁻³ | 1 | 1 | 50 |
| 28* | 6 | 5 x 10⁻⁴ | 1 | 1 | 51 |
| 29* | 6 | 10⁻⁴ | 1 | 1 | 48 |

| | | | | | |
|---|---|---|---|---|---|
| * Not according to the invention | | | | | |

The result of this test is shown in Fig. 4.

### Sample tempering after functionalization with sol-gel solution and AM

Sol-gel A containing AM_7 as mentioned above was prepared under stirring and reflux (sol-gel solution aging) for 3.5 hours at 56 °C. The sol-gel was cooled down for at least 20 minutes. The leather substrate was treated by dipping in the sol-gel for 5 minutes under the conditions described above.

The substrate was then tempered in an oven for different time durations and temperatures. The results are shown in Table 12.

**Table 12**

| Test | Sample tempering | | Water absorption (%) | | | Drop angle (°) | |
|---|---|---|---|---|---|---|---|
| | t (h:min) | T (°C) | 1^{st} meas. | 2^{nd} meas. | Average | Outer side of liner | Inner side of liner |
| 53 | 96 | 55 | 24.2 | 22.6 | 23.4 | 120.5 | 133.6 |
| 62 | 2:00 | 65 | 52.9 | 36.1 | 44.5 | 122.7 | 121.6 |
| 63 | 17:00 | 65 | 21.4 | 20.0 | 20.7 | 123.4 | 139.2 |
| 64 | 23:50 | 65 | 26.9 | 22.6 | 24.8 | 121.7 | 134.8 |
| 65 | 24:00 | 65 | 23.0 | 21.5 | 22.2 | 122.6 | 135.7 |
| 66 | 4:98 | 85 | 19.4 | 21.1 | 20.3 | 121.2 | 135.2 |
| 67 | 14:85 | 85 | 27.6 | 18.7 | 23.1 | 122.7 | 134.7 |
| 68 | 1:00 | 105 | 44.5 | 22.5 | 33.5 | 119.5 | 136.9 |
| 69 | 3:17 | 105 | 19.4 | 20.5 | 20.0 | 123.6 | 137.2 |
| 70 | 0:50 | 120 | 23.9 | 19.1 | 21.5 | 118.4 | 136.2 |

Tests 62 and 68 have a higher initial water absorption measurement and a second lower measurement. This observation can be connected to a tempering time which seems to be too short to allow complete polymerization of the sol-gel and the total evaporation of the solvent.

The increase of the temperature shortens the reaction time. However, a higher temperature could lead to the degradation of the leather. No visual modification of the samples processed at 105 °C and 120 °C has been detected, but a shrinking of the leather samples has been observed at a temperature > 85 °C due to the nature of the substrate.

### DRYING

The substrate is dried after impregnation. Recommended drying temperature is from 20 °C to 85 °C, preferably from 25 °C to 65 °C in order to preserve the leather structure, more preferably 30 °C. Drying will be done until the solvent is evaporated. At 85 °C, a duration of 15 hours allows the solvent to be sufficiently evaporated. At 30 °C, a duration of 72 hours allows the solvent to be sufficiently evaporated. Advantageously the air is ventilated during drying.

For example, the substrate can be placed in a Greiner Tube for drying.

Advantageously the substrate is dried under ventilated air at 30 °C for 72 h.

### COMPOSITION OF THE SOL-GEL

The water absorptions obtained with different TEOS/AM_7 ratios are shown in Fig. 5.

Fig. 5 shows that by modifying the TEOS/AM_7 ratio, the water absorption (%) of the leather substrate is influenced. For each AM_7 concentration, there is an optimal range of TEOS concentrations, whereas above or below this range, the water absorption increases.

As example, for 0.09 mol% of AM based on the total sol-gel solution including AM, a concentration of 2.9 mol% of TEOS is preferable, with a water absorption of 17 %. The water absorption is higher for the same 0.09 mol% of AM_7 and concentrations of TEOS of 1.8 mol% or 3.8 mol%.

An increase of the AM_7 concentration induces globally a reduction of the water absorption of the leather substrate.

When the AM_7 concentration is increased by a factor 7 (8.54 10⁻² mol·L⁻¹ instead of 1.21·10⁻² mol·L⁻¹), a gain of water absorption of only 4 % is observed, as illustrated in Fig. 5.

## Claims

1. A composition for impregnating a watchstrap or parts thereof, the composition comprising
a) a sol-gel,
b) at least one active organic compound, wherein the active organic compound is selected from
i.) an alkylphosphonic acid of the formula CH₃(CH₂)ₙPO₃H₂, with n comprised between 2 and 18,
ii.) a fluorinated alkylphosphonic acid of the formula CF₃(CF₂)ₙ(CH₂)ₘPO₃H₂, with n and m comprised between 2 and 18, m and n being identical or different.

2. The composition of claim 1, wherein the active organic compound is selected from the group consisting of
n-octylphosphonic acid,
dodecylphosphonic acid,
n-octadecylphosphonic acid,
3,3,4,4,5,5,6,6,6-nonafluorohexylphosphonic acid 12,12,13,13,14,14,15,15,15-nonafluoropentadecylphosphonic acid, 3,3,4,4,5,5,6,6,7,7,8,8,9,9,10,10,10-heptadecafluorodecylphosphonic acid, and
12,12,13,13,14,14,15,15,16,16,17,17,18,18,19,19-heptadecafluoro-nonadecylphosphonic acid.

3. The composition of the preceding claim, additionally comprising bioactive metal nanoparticles, preferably silver nanoparticles.

4. A process for functionalizing a substrate which is a watchstrap or a part thereof by impregnation, comprising the steps
i. selecting a substrate;
ii. preparing a sol-gel solution from a hydrolysable silane in acidic or basic conditions;
iii. aging the sol-gel solution;
iv. using the sol-gel solution to at least partially impregnate or coat the substrate;
v. drying the treated substrate;
vi. fixing the sol-gel on the substrate by tempering;
wherein the sol-gel contains at least one active organic compound as defined in any of claims 1 to 2.

5. The process of claim 4, wherein the substrate material is selected from natural leather, natural leather alternatives made from plant fibres, cork, and textile fabrics, and combinations thereof.

6. Use of a composition of any of claims 1 to 3 for lowering water absorption of a watchstrap or one or more parts thereof.

7. A watchstrap obtainable by the process of any of claims 4 to 5.

8. A watchstrap comprising at least one active organic molecule as defined in any of claims 1 to 3 and a silica sol-gel network.

## Patentansprüche

1. Zusammensetzung zum Imprägnieren eines Uhrenarmbands oder von Teilen davon, wobei die Zusammensetzung
a) ein Sol-Gel,
b) mindestens eine aktive organische Verbindung, wobei die aktive organische Verbindung ausgewählt ist aus
i.) einer Alkylphosphonsäure der Formel CH₃(CH₂)ₙPO₃H₂, wobei n zwischen 2 und 18 liegt,
ii.) einer fluorierten Alkylphosphonsäure der Formel CF₃(CF₂)ₙ(CH₂)ₘPO₃H₂, wobei n und m zwischen 2 und 18 liegen und m und n gleich oder verschieden sind.

2. Zusammensetzung nach Anspruch 1, wobei die aktive organische Verbindung ausgewählt ist aus der Gruppe bestehend aus
n-Octylphosphonsäure,
Dodecylphosphonsäure,
n-Octadecylphosphonsäure,
3,3,4,4,5,5,6,6,6-Nonafluorhexylphosphonsäure 12,12,13,13,14,14,15,15,15-Nonafluorpentadecylphosphonsäure, 3,3,4,4,5,5,6,6,7,7,8,8,9,9,10,10,10-Heptadecafluordecylphosphonsäure und
12,12,13,13,14,14,15,15,16,16,17,17,18,18,19,19-Heptadecafluornonadecylphosphonsäure.

3. Die Zusammensetzung nach dem vorstehenden Anspruch, zusätzlich enthaltend bioaktive Metallnanopartikel, vorzugsweise Silbernanopartikel.

4. Verfahren zur Funktionalisierung eines Substrats, bei dem es sich um ein Uhrenarmband oder einen Teil davon handelt, durch Imprägnierung, umfassend die Schritte
i. Auswahl eines Substrats;
ii. Herstellung einer Sol-Gel-Lösung aus einem hydrolysierbaren Silan unter sauren oder basischen Bedingungen;
iii. Altern der Sol-Gel-Lösung;
iv. Verwenden der Sol-Gel-Lösung, um das Substrat zumindest teilweise zu imprägnieren oder zu beschichten;
v. Trocknen des behandelten Substrats;
vi. Fixieren des Sol-Gels auf dem Substrat durch Tempern;
wobei das Sol-Gel mindestens eine aktive organische Verbindung gemäß einem der Ansprüche 1 bis 2 enthält.

5. Verfahren nach Anspruch 4, wobei das Substratmaterial ausgewählt ist aus Naturleder, Naturlederersatzstoffen aus Pflanzenfasern, Kork und Textilgeweben, sowie Kombinationen davon.

6. Verwendung einer Zusammensetzung nach einem der Ansprüche 1 bis 3 zur Verringerung der Wasseraufnahme eines Uhrenarmbands oder eines oder mehrerer Teile davon.

7. Ein Uhrenarmband, das durch das Verfahren nach einem der Ansprüche 4 bis 5 erhältlich ist.

8. Ein Uhrenarmband, das mindestens ein aktives organisches Molekül, wie in einem der Ansprüche 1 bis 3 definiert, und ein Silica-Sol-Gel-Netzwerk umfasst.

## Revendications

1. Composition destinée à l'imprégnation d'un bracelet de montre ou de parties de celui-ci, ladite composition comprenant
a) un sol-gel,
b) au moins un composé organique actif, dans laquelle le composé organique actif est choisi parmi
i.) un acide alkylphosphonique de formule CH₃(CH₂)ₙPO₃H₂, où n est compris entre 2 et 18,
ii.) un acide alkylphosphonique fluoré de formule CF₃(CF₂)ₙ(CH₂)ₘPO₃H₂, où n et m sont compris entre 2 et 18, m et n étant identiques ou différents.

2. Composition selon la revendication 1, dans laquelle le composé organique actif est choisi parmi le groupe constitué de
l'acide n-octylphosphonique,
l'acide dodécylphosphonique,
l'acide n-octadécylphosphonique,
l'acide 3,3,4,4,5,5,6,6,6-nonafluorohexylphosphonique
l'acide 12,12,13,13,14,14,15,15,15-nonafluoropentadécylphosphonique,
l'acide 3,3,4,4,5,5,6,6,7,7,8,8,9,9,10,10,10-heptadécafluorodécylphosphonique, et
l'acide 12,12,13,13,14,14,15,15,16,16,17,17,18,18,19,19-heptadécafluoro-nonadécylphosphonique.

3. Composition selon la revendication précédente, comprenant en outre des nanoparticules métalliques bioactives, de préférence des nanoparticules d'argent.

4. Procédé de fonctionnalisation d'un substrat qui est un bracelet de montre ou une partie de celui-ci par imprégnation, comprenant les étapes
i. sélectionner un substrat;
ii. préparer une solution sol-gel à partir d'un silane hydrolysable dans des conditions acides ou basiques;
iii. vieillisser la solution sol-gel;
iv. utiliser la solution sol-gel pour imprégner ou enduire au moins partiellement le substrat;
v. sécher le substrat traité;
vi. fixer le sol-gel sur le substrat par recuit;
dans lequel le sol-gel contient au moins un composé organique actif tel que défini dans l'une quelconque des revendications 1 à 2.

5. Procédé selon la revendication 4, dans lequel le matériau du substrat est choisi parmi le cuir naturel, les substituts du cuir naturel à base de fibres végétales, le liège et les tissus textiles, ainsi que leurs combinaisons.

6. Utilisation d'une composition selon l'une quelconque des revendications 1 à 3 pour réduire l'absorption d'eau d'un bracelet de montre ou d'une ou plusieurs de ses parties.

7. Bracelet de montre pouvant être obtenu par le procédé selon l'une quelconque des revendications 4 à 5.

8. Bracelet de montre comprenant au moins une molécule organique active telle que définie dans l'une quelconque des revendications 1 à 3 et un réseau de sol-gel de silice.
